# EUROPÄISCHE PATENTANMELDUNG

(11) **EP 1 571 576 A1**
(43) Veröffentlichungstag der Anmeldung: **07.09.2005**
(21) Anmeldenummer: 05004669.7
(22) Anmeldetag: 03.03.2005
(51) Int. Cl.: G06F 17/60

(54) **Verfahren zur Durchführung einer Zwei- oder Mehrstufenplanung**

(30) Priorität: 03.03.2004 DE 102004010953
(71) Anmelder: Niemann, Joachim, 01279 Dresden (DE)
(72) Erfinder: Niemann, Joachim, 01279 Dresden (DE)
(74) Vertreter: Lippert, Stachow & Partner

(57) **Zusammenfassung**

Die Erfindung betrifft ein Verfahren zur Durchführung einer Zwei- oder Mehrstufenplanung zur Ergänzung der Netzplantechnik durch fortlaufende Speicherung von terminlichen als auch finanziellen Vorgaben als auch in Vorgängen in einer strukturierten Datenbank. Die der Erfindung zugrunde liegende Aufgabe besteht darin, ein rechnergestütztes Verfahren zur Durchführung einer Zwei- oder Mehrstufenplanung zur Ergänzung der Netzplantechnik zu schaffen, welches eine erheblich höhere Flexibilität ermöglicht. Erreicht wird das dadurch, dass die Planungsdatenbank auf einem Speichermedium eines Computers in mindestens zwei voneinander unabhängige Ebenen (Dateien) strukturiert wird, und zwar in eine erste Ebene der strategischen Planungsdaten und eine zweite Ebene der taktischen Planungsdaten mit beliebigem Datenumfang, wobei eine selbsttätige datentechnische Verknüpfung der Planungsdaten der einzelnen Ebenen miteinander durch einen Controller über Ecktermindaten vorgenommen wird.

## Beschreibung

Die Erfindung betrifft ein Verfahren zur Durchführung einer Zwei- oder Mehrstufenplanung zur Ergänzung der Netzplantechnik durch fortlaufende Speicherung von terminlichen als auch finanziellen Vorgaben als auch in Vorgängen in einer strukturierten Datenbank.

Bei der bisher üblichen Netzplantechnik wird ein Terminplan verwendet, der im Laufe des Projektfortschrittes aktualisiert wird und sowohl terminlich, finanziell, als auch in den Vorgängen (Vorgänge in der Terminplanung sind die kleinsten, nicht mehr teilbaren Tätigkeiten).

Die der Erfindung zugrunde liegende Aufgabe besteht darin, ein rechnergestütztes Verfahren zur Durchführung einer Zwei- oder Mehrstufenplanung zur Ergänzung der Netzplantechnik zu schaffen, welches eine erheblich höhere Flexibilität ermöglicht.

Die Aufgabe wird dadurch gelöst, dass die Planungsdatenbank auf einem Speichermedium eines Computers in mindestens zwei voneinander unabhängige Ebenen (Dateien) strukturiert wird, und zwar in eine erste Ebene der strategischen Planungsdaten und eine zweite Ebene der taktischen Planungsdaten mit beliebigem Datenumfang, wobei eine selbsttätige datentechnische Verknüpfung der Planungsdaten der einzelnen Ebenen miteinander durch einen Controller über vorgegebene Eckdaten vorgenommen wird.

Vorzugsweise werden dabei als Eckdaten (Festlegungsdaten) Anfangs-, Zwischen- und Endtermine vorgegeben.

In Fortführung der Erfindung sind die in unterschiedlichen Speicherbereichen abgelegten Termindaten der ersten Ebene der strategischen Planung und der zweiten Ebene der taktischen Planung parallel unabhängig voneinander führbar und aktualisierbar.

Weiterhin erhält jede Ebene/Vorgang hardwaregestützt Zieldaten aus der Planung, wie Kosten, Dauer, Anfang und Ende des Vorgangs und parallel dazu Summationsdaten aus untergeordneten Vorgängen.

Schließlich ist vorgesehen, dass die Summationsdaten dahingehend charakterisiert werden, ob die unteren Vorgänge der einen Ebene eine vollständige Beschreibung des übergeordneten Vorganges der anderen Ebene in Summe darstellen oder nicht.

Zur Sicherstellung einer hinreichenden Aktualität der in den einzelnen Ebenen abgelegten Daten wird ein gelegentlicher oder periodischer datentechnischer Vergleich der Festlegungsdaten mit den zugehörigen Summationsdaten vorgenommen.

Das neue Verfahren unterscheidet sich von der bisherigen Vorgehensweise grundlegend, indem die mit einem Computer oder sonstigen Datenverarbeitungsanlage vorgenommene Planung in zwei oder mehr Ebenen/Vorgänge (Dateien) unterteilt wird, und zwar eine Ebene der strategischen Planung und eine Ebene der taktischen Planung, wobei die Dateien über die Eckdaten miteinander verknüpft sind und ein Plausibilitätsvergleich durch vorgegebene Summationsdaten vorgenommen wird, die in einem weiteren Speicherbereich abgelegt sind.

Die somit mögliche strategische Planung in der ersten Ebene kann dabei in gewisser Weise der Netzplantechnik entsprechen. Die strategische Planung beschreibt das Projekt mit den elementaren Eckdaten bezüglich Anfangs-, End- und Zwischenterminen. Sie ähnelt der ersten Stufe (Vorentwurf in der Netzplantechnik). In der strategischen Planung ist das nicht zwingend nötig, die Planung kann aber bis auf einzelne Vorgänge herab detailliert werden.

Diese Planung ist Ausgangspunkt für die so genannte taktische Planung. In der taktischen Planung werden für die einzelnen Vorgänge konkrete Termine in Absprache mit den mittelbar und unmittelbar Betroffenen vereinbart. Mit dieser Absprache ist die Machbarkeit und Zuverlässigkeit der einzelnen Termine gegeben, d. h. ihre Kontrollierbarkeit bezüglich des Handelns der einzelnen Beteiligten, auch dass sich die Kontrolle nicht auf abstrakte Planungstermine, sondern auf konkrete, tatsächlich durchzuführende Tätigkeiten bezieht.

Kommen weitere Vorgänge/Tätigkeiten in der konkreten Planung vor, können diese in der taktischen Planung einfach fest gelegt werden. Dabei betrachtet die taktische Planung den üblichen unmittelbaren zeitlichen Planungshorizont. Die Zusammenhänge zur ursprünglichen Planung existieren nur über die Ecktermine (zwingende Anfangs-, End- und Zwischentermine).

Der Vorteil ist, dass in der strategischen Planung die so genannten strategischen Ziele des Projektes festgelegt und so je nach Nutzungserfordernissen spezifizierte/detaillierte Planungen aufgestellt werden.

Der Vorteil der strategischen Planung ist, dass diese erheblich einfacher und in den Terminen ungenauer sein kann, als die Netzplantechnik. Nach dem Aufstellen dieser Planung muss diese Planung im Gegensatz zur Netzplantechnik nicht mehr fortgeschrieben werden, es sei denn, es ändern sich entscheidende äußere Randbedingungen. Ab diesem Zeitpunkt dient diese Planung nur mehr als Vorgabe für die taktische Planung, welche die konkrete Detailabstimmung inklusive der nötigen Abstimmungen vornimmt.

Durch die verfügbaren Verfahrens techniken und datentechnischen Möglichkeiten kann die strategische Planung durch die ergänzenden Festlegungen in der taktischen Planung beliebig erweitert werden. Die strategische Planung muss nicht unmittelbar wie sonst in der Netzplantechnik aktualisiert und erweitert werden. Der Bezug zwischen taktischer Planung und strategischer Planung muss nicht unmittelbar wie sonst in der Netzplantechnik aktualisiert und erweitert werden.

Der Bezug zwischen taktischer Planung und strategischer Planung kann datentechnisch ohne weiteren Aufwand realisiert werden. Damit ist eine erheblich geringere und einfachere Planungsgenauigkeit bei gleichzeitiger Erhöhung der Flexibilität gewährleistet.

Das technische Verfahren funktioniert derart, dass zu den Vorgängen in der Netzplantechnik weitere Ergänzungen aus der taktischen Planung auf datentechnischer Ebene automatisch durchgeführt werden. Dabei wird eine parallele Terminplanung geführt (taktisch, strategisch).

Das vorstehend beschriebene Verfahren kann durch eine weitere Modifikation ergänzt werden:

Abweichend von der Netzplantechnik gibt es keine Vorgänge und Summationsbeschreibungen, sondern jede Ebene wird zusätzlich wie ein Vorgang behandelt. Damit erhält jede Ebene/Vorgänge Zieldaten aus der Planung für Kosten, Dauer, Anfang und Ende und parallel dazu Summationsdaten aus untergeordneten Vorgängen, so denn welche vorhanden sind. Dabei werden diese Summationsdaten dahingehend charakterisiert, ob die unteren Vorgänge eine vollständige Beschreibung des übergeordneten Vorganges in Summe darstellen oder nicht.

Mit den oben beschriebenen verfahrenstechnischen, in der Datenbank und Software realisierten Prozessen kann abweichend von der Netzplantechnik unabhängig auf jeder Ebene gearbeitet, Festlegungen getroffen und kontrolliert werden, bei gleichzeitig maximaler Planungs- und Handlungsfreiheit der untergeordneten Prozesse.

Planungsfehler/Realisierungsprobleme können auf diese Art und Weise schnell kontrolliert werden durch einen datentechnischen Vergleich der Festlegungsdaten mit den zugehörigen Summierungsdaten, ohne dabei die Planungsfreiheit dieses Verfahrens gegenüber der Netzplantechnik zu verlieren.

Mit dem erfindungsgemäßen Verfahren können mit Hilfe der Daten aus den Datenbanken insbesondere aus der Ebene der taktischen Planungsdaten Sitzungsvorlagen erstellt werden, wodurch die Koordination mit erheblicher Zeiteinsparung erfolgen kann.

Die Erfindung soll nachfolgend an einem Ausführungsbeispiel näher erläutert werden. In den zugehörigen Zeichnungen zeigen:
- Fig. 1:: eine schematische Darstellung der Strukturierung der Speichermedien sowie der Datenübergabe zwischen einzelnen Ebenen; und
- Fig. 2:: eine schematische Darstellung des technischen Ablaufes zur Erzeugung von Dokumenten/Daten zur Projektsteuerung.

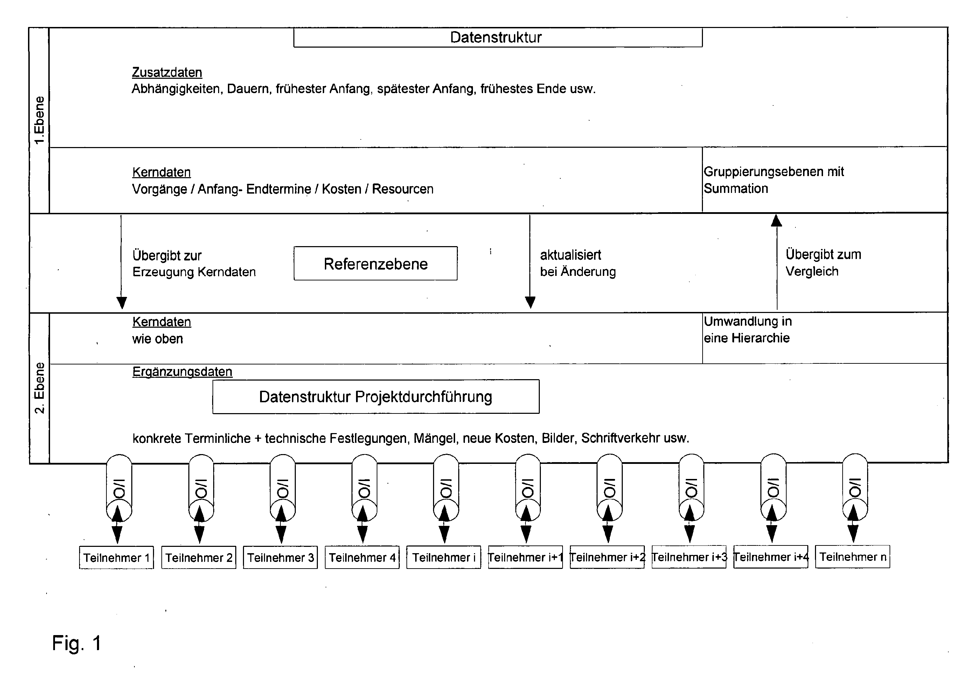

Das Verfahren zur Durchführung einer Zweistufenplanung (Fig. 1) sieht vor, dass eine Planungsdatenbank auf einem Speichermedium eines Computers zunächst in mindestens zwei voneinander unabhängige Ebenen (Dateien) strukturiert wird. Die Strukturierung erfolgt dabei derart, dass eine erste Ebene der strategischen Planungsdaten und eine zweite Ebene der taktischen Planungsdaten mit beliebigem Datenumfang gebildet wird, die über einen Controller zur selbsttätige datentechnische Verknüpfung der Daten der einzelnen Ebenen miteinander über vorgegebene Eckdaten in beiden Richtungen vorgenommen wird.

Als Eckdaten für die Verknüpfung können dabei als Eckdaten (Festlegungsdaten) Anfangs-, Zwischen- und Endtermine vorgegeben werden.

Wesentliches Kennzeichen des Verfahrens ist, dass die in unterschiedlichen Speicherbereichen abgelegten Termindaten der ersten Ebene der strategischen Planung und der zweiten Ebene der taktischen Planung parallel unabhängig voneinander führbar und aktualisierbar sind.

Weiterhin erhält jede Ebene/Vorgang hardwaregestützt Ziel- bzw. Zusatzdaten aus der Planung, wie Kosten, Dauer, Anfang und Ende des Vorgangs und parallel dazu Summationsdaten aus untergeordneten Vorgängen. Diese Summationsdaten werden nachfolgend dahingehend charakterisiert, ob die unteren Vorgänge der einen Ebene eine vollständige Beschreibung des übergeordneten Vorganges der anderen Ebene in Summe darstellen oder nicht.

Zur Sicherstellung einer hinreichenden Aktualität der in den einzelnen Ebenen abgelegten Daten wird ein gelegentlicher oder periodischer datentechnischer Vergleich der Festlegungsdaten mit den zugehörigen Summationsdaten vorgenommen.

Die Vorteile des erfindungsgemäßen Verfahrens sind darin zu sehen, dass eine Übergabe der Kerndaten der Netzplantechnik ohne deren Strukturierung an die zweite Ebene möglich i st, so dass diese Daten in das Geschehen im Projekt relativ frei eingebunden und um technische Ereignisse und Zustände frei ergänzt werden können.

Die Gruppierungsebenen der Netzplantechnik werden in eine Hierarchiestruktur mit gleichwertigen Ebenen umgesetzt, was durch die besondere Strukturierung und Kopplung der Speicherbereiche erreicht wird. Das ermöglicht sogar die Einfügung weiterer Ebenen, so dass mit einfachen technischen Mitteln, wie Vergrößerung des Speicherbereiches, eine flexible Anpassung des Verfahrens an die Erfordernisse möglich ist.

Die notwendige Datenein- /-ausgabe kann einfach über elektronische Medien, wie SMS, E-Mail, Webseite oder auch in Papierform erfolgen, so dass dann Anweisungen zum Handeln zur Verfügung gestellt werden, die durch die interne Kommunikation zwischen den einzelnen Ebenen selbsttätig bereitgestellt werden.

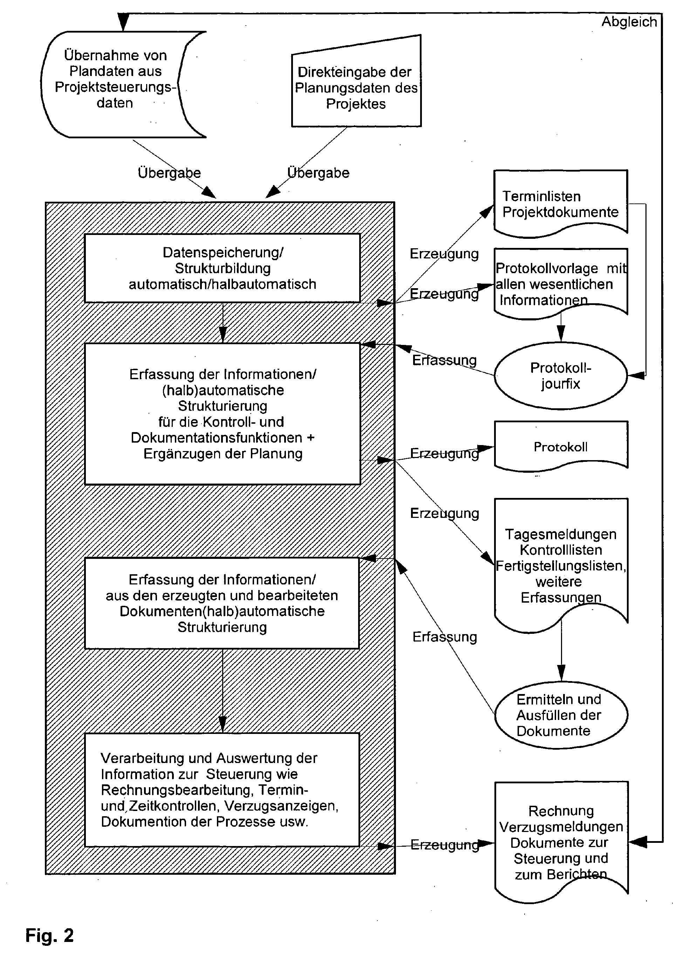

Fig. 2 zeigt eine schematische Darstellung des technischen Ablaufes zur Erzeugung von Dokumenten/Daten zur Projektsteuerung, sozusagen den für den Anwender sichtbaren Teil des Verfahrens.

## Patentansprüche

1. Verfahren zur Durchführung einer Zweistufenplanung zur Ergänzung der Netzplantechnik durch fortlaufende Speicherung von terminlichen als auch finanziellen Vorgaben als auch in Vorgängen in einer strukturierten Planungsdatenbank,
**dadurch gekennzeichnet, dass** die Planungsdatenbank auf einem Speichermedium eines Computers in mindestens zwei voneinander unabhängige Ebenen (Dateien) strukturiert wird, und zwar in eine erste Ebene der strategischen Planungsdaten und eine zweite Ebene der taktischen Planungsdaten mit beliebigem Datenumfang, wobei eine selbsttätige datentechnische Verknüpfung der Planungsdaten der einzelnen Ebenen miteinander durch einen Controller über Ecktermindaten vorgenommen wird.

2. Verfahren nach Anspruch 1, **dadurch gekennzeichnet, dass** als Ecktermine (Festlegungsdaten) Anfangs-, Zwischen- und Endtermine vorgesehen sind.

3. Verfahren nach Anspruch 1 und 2, **dadurch gekennzeichnet, dass** die in unterschiedlichen Speicherbereichen abgelegten Termindaten der ersten Ebene der strategischen Planung und der zweiten Ebene der taktischen Planung parallel unabhängig voneinander führbar und aktualisierbar sind.

4. Verfahren nach den Ansprüchen 1 bis 3, **dadurch gekennzeichnet, dass** jede Ebene/Vorgang Zieldaten aus der Planung für Kosten, Dauer, Anfang und Ende und parallel dazu Summationsdaten aus untergeordneten Vorgängen enthält.

5. Verfahren nach Anspruch 4, **dadurch gekennzeichnet, dass** die Summationsdaten dahingehend charakterisiert werden, ob die unteren Vorgänge der einen Ebene eine vollständige Beschreibung des übergeordneten Vorganges der anderen Ebene in Summe darstellen oder nicht.

6. Verfahren nach einem der Ansprüche 1 bis 5, **dadurch gekennzeichnet, dass** ein gelegentlicher/periodischer datentechnischer Vergleich der Festlegungsdaten mit den zugehörigen Summationsdaten vorgenommen wird.
